# EUROPÄISCHE PATENTSCHRIFT

(11) **EP 0 948 107 B1**
(45) Veröffentlichungstag und Bekanntmachung des Hinweises auf die Patenterteilung: **02.09.2009**
(21) Anmeldenummer: 99104640.0
(22) Anmeldetag: 09.03.1999
(51) Int. Cl.: H02B 1/32, H02B 1/30

(54) **Vorrichtung zum Befestigen von Anbauelementen an einem Rahmenschenkel eines Schaltschrank-Rahmengestelles**
Device for fastening mounting elements to a frame member of a switchgear cabinet framework
Dispositif pour fixer des éléments de support sur un montant d'un chassis d'une armoire de distribution

(30) Priorität: 31.03.1998 DE 19814268
(43) Veröffentlichungstag der Anmeldung: 06.10.1999
(73) Patentinhaber: Rittal-Werk Rudolf Loh GmbH & Co. KG, 35745 Herborn (DE)
(72) Erfinder: Reuter, Wolfgang, 57299 Burbach 5 (DE); Benner, Rolf, 35745 Herborn-Amdorf (DE)
(74) Vertreter: Fleck, Hermann-Josef

(56) Entgegenhaltungen:
- EP-A- 0 533 555
- DE-A- 4 336 204
- DE-C- 19 537 016
- DE-C- 19 544 834

## Beschreibung

Die Erfindung betrifft eine Vorrichtung zum Befestigen von Anbauelementen wie Montageschienen, Montageplatten, Ablageplatten an einem Rahmenschenkel eines Schaltschrank-Rahmengestelles, bei der die Rahmenschenkel symmetrisch zu ihrer Querschnittsdiagonale ausgebildet und mit dieser auf die Diagonale des Rahmengestelles ausgerichtet sind, bei der die Rahmenschenkel auf der zum Rahmengestell-Innenraum gerichteten Innenseite eine Befestigungsaufnahme mit zwei senkrecht zueinander stehenden Befestigungsprofilseiten aufweisen, die parallel zu den zugekehrten Außenseiten des Schaltschrank-Rahmengestelles verlaufen, mit System-Befestigungsaufnahmen aus quadratischen oder rechteckförmigen Durchbrüchen und Befestigungsbohrungen versehen sind und in Zusatz-Profilseiten mit gleichen Reihen von Befestigungsaufnahmen übergehen, die senkrecht zu den zugekehrten Außenseiten des Schaltschrank-Rahmengestelles stehen, und bei der mit den Rahmen schenkeln Befestigungselemente verbindbar sind, die in drei jeweils im rechten Winkel zueinander stehenden Richtungen Befestigungsflächen mit Befestigungsaufnahmen tragen, wobei die Befestigungselemente als Befestigungsblöcke ausgebildet sind, die mit zwei im rechten Winkel zueinander stehenden Anlageflächen an die Profilseiten eines Rahmenschenkels anlegbar und mit diesem verbindbar sind, wobei die Anlageflächen der Befestigungsblöcke in Befestigungsflächen übergehen, die bei am Rahmenschenkel angebrachten Befestigungsblock bündig mit den Zusatz-Profilseiten des Rahmenschenkels abschließen, und wobei die Befestigungsblöcke in den senkrecht zur Längsrichtung des Rahmenschenkels stehenden Stirnseiten und den mit den Zusatz-Profilseiten bündigen Befestigungsflächen mit als Bohrungen und/oder Gewindeaufnahmen ausgebildeten Befestigungsaufnahmen versehen sind.

Eine Vorrichtung dieser Art ist aus der DE 195 37 016 C1 bekannt. Dabei bilden die Profilseiten mit Übergangsabschnitten eine zum Innenraum des Schaltschrank-Rahmengestelles hin offene Schwalbenschwanznut. In diese kann ein Schwalbenschwanzsteg des Befestigungsblockes eingeführt werden. Der Befestigungsblock wird in der Einführstellung in die Schwalbenschwanznut eingeführt und dann um 90° gedreht in die Befestigungsstellung gebracht. Dabei ist der Befestigungsblock wohl in der Befestigungsstellung gehalten, er ist in der Befestigungsaufnahme jedoch nach wie vor verschiebbar und muss zusätzlich in Richtung derselben festgelegt, z.B. verschraubt werden.

Aus der DE 195 44 834 C1 ist eine bügelartige Befestigungsvorrichtung bekannt, die an einem Schenkel einen Befestigungsansatz trägt, der in eine Befestigungsaufnahme in einer Anlage-Profilseite eines Rahmenschenkels einführbar ist. Der andere Schenkel der Befestigungsvorrichtung wird mit einer parallel zur ersten Anlage-Profilseite stehenden Anlage-Profilseite verschraubt. Nur an dem mittleren Schenkel der Befestigungsvorrichtung kann ein Anbauelement angebracht werden.

Es ist Aufgabe der Erfindung, eine Vorrichtung der eingangs erwähnten Art so zu gestalten, dass das Anbringen des Befestigungsblockes am Rahmenschenkel vereinfacht wird, ohne jedoch die Anbringungsmöglichkeiten für Anbauelemente zu beeinträchtigen.

Diese Aufgabe wird nach der Erfindung dadurch gelöst, dass eine der Anlageflächen mit Ansätzen versehen ist, die in Befestigungsaufnahmen einer Profilseite des Rahmenschenkels einführbar sind und dass die andere Anlagefläche mittels Schraube an der anderen Profilseite festschraubbar ist.

Der Befestigungsblock wird einfach in die durch die beiden Profilseiten begrenzte Befestigungsaufnahme des Rahmenschenkels eingeführt, wobei die Ansätze des Befestigungsblockes die Positionierung des Befestigungsblockes an einer Profilseite in Längsrichtung der Befestigungsaufnahme übernehmen und die Festlegung mit der Verschraubung des Befestigungsblockes an der anderen Profilseite vorgenommen wird. Dabei gibt die Rasterung der System-Befestigungsaufnahmen in den Profilseiten des Rahmenschenkels die Rasterung für die Anbringung der Befestigungsblöcke vor.

Um auch das Raster der System-Befestigungsaufnahmen auf die Befestigungsflächen der Befestigungsblöcke zu übernehmen, sieht eine Ausgestaltung vor, dass die Befestigungsflächen der Befestigungsblöcke mindestens zwei Bohrungen und/oder Gewindeaufnahmen aufweisen, die in Längsrichtung des Rahmenschenkels einen Abstand aufweisen, der dem Rastermaß der System-Befestigungsaufnahme des Schaltschrank-Rahmengestelles entspricht. Die Ansätze an einer Anlagefläche lassen eine eindeutige Positionierung im Rastermaß der System-Befestigungsaufnahmen zu und behindern das Einführen in die Befestigungsaufnahmen des Rahmenschenkels nicht.

Die Verschraubung des Befestigungsblockes am Rahmenschenkel ist nach einer Ausgestaltung so gelöst, daß die Schraube in eine im Durchmesser abgesetzte Durchgangsbohrung einsetzbar ist, die von der der Anlagefläche gegenüberliegenden parallelen Befestigungsfläche ausgeht oder daß die Schraube in schlitzförmige Aussparungen der Befestigungsflächen und zumindest einer Anlagefläche einführbar ist, wobei im Bereich der Anlagefläche die Aussparung Absütztege für den Schraubenkopf bildet.

Bei der zweiten Ausführungsart kann nach einer weiteren Ausgestaltung vorgesehen sein, daß die Breite der Aussparung in den Befestigungsflächen an den Durchmesser des Schraubenkopfes der Schraube und die Breite der Aussparung in der Anlagefläche an den Durchmesser des Gewindeteils der Schraube angepaßt sind, wobei die Anschraubmöglichkeiten dadurch noch erweiterbar sind, daß beide Anlageflächen mit einer Aussparung für eine Schraube versehen sind, die sich nur über einen Teil der Breite der Anlageflächen erstrecken und von den zugekehrten Befestigungsflächen ausgehen.

Nach einer weiteren Ausgestaltung kann vorgesehen, sein, daß die Anlageflächen und die Befestigungsflächen über parallel zueinander verlaufende Übergangsabschnitte ineinander übergehen. Die Befestigungsblöcke finden ausreichend Platz in der Befestigungsaufnahme des Rahmenschenkels und stehen zum Innenraum des Schaltschrank-Rahmengestelles hin nicht unnötig weit am Rahmenschenkel ab.

Ist dazu noch vorgesehen, daß die Profilseiten des Rahmenschenkels Teil einer schwalbenschwanzförmigen Befestigungsaufnahme sind und daß die Übergangsabschnitte bei am Rahmenschenkel befestigten Befestigungsblock parallel zum Nutgrund verlaufen, dann können sich die am Rahmenschenkel befestigten Befestigungsblöcke zusätzlich am Nutgrund der Schwalbenschwanznut abstützen.

Die Befestigungsblöcke lassen sich als einfache Spritzgußteile aus Metall oder Kunststoff kostengünstig herstellen.

Die Erfindung wird anhand von in den Zeichnungen dargestellten Ausführungsbeispielen näher erläutert. Es zeigen:
- Fig. 1: in perspektivischer Ansicht einen Rahmenschenkel auf dessen Innenseite gesehen mit einem daran befestigten Befestigungsblock, an dem ein Anbauelement anbringbar ist,
- Fig. 2: in perspektivischer Ansicht einen Teil eines Schaltschrank-Rahmengestelles mit der Befestigung einer horizontalen Ablageplatte und
- Fig. 3: ebenfalls in perspektivischer Ansicht einen Teil eines Schaltschrank-Rahmengestelles mit der Befestigung einer vertikalen Montageplatte.

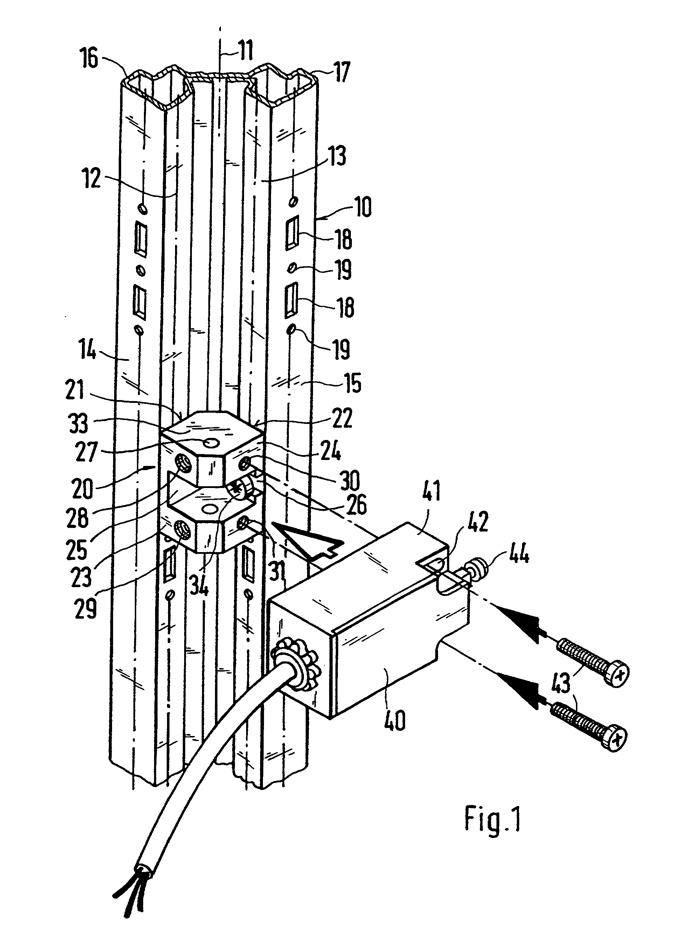

Der in Fig. 1 gezeigte Rahmenschenkel 10 ist zu seiner Querschnittsdiagonale 11 spiegelbildlich, d.h. symmetrisch, ausgebildet. Im Schaltschrank-Rahmengestell sind die Rahmenschenkel 10 so eingebaut, daß ihre Querschnittsdiagonalen 11 mit Diagonalen des Schaltschrank-Rahmengestelles zusammenfallen. Dem Innenraum des Schaltschrank-Rahmengestelles zugekehrt bildet der Rahmenschenkel 10 eine zur Querschnittsdiagonalen 11 symmetrische Befestigungsaufnahme, die durch die beiden senkrecht zueinander stehenden Profilseiten 12 und 13 definiert ist und sich über die gesamte Längsabmessung des Rahmenschenkels 10 erstreckt. Diese Profilseiten 12 und 13 stehen senkrecht zu den im Bereich des Rahmenschenkels 10 aufeinanderstoßenden Außenseiten des Schaltschrank-Rahmengestelles, die wiederum auch durch die äußeren Profilseiten 16 und 17 des Rahmenschenkels 10 definiert sind. Die Befestigungsaufnahme des Rahmenschenkels 10 kann dabei über weiter Abschnitte zur Schwalbenschwanznut vervollständigt sein und die Profilseiten 12 und 13 gehen über Zusatz-Profilseiten 14 und 15 in die äußeren Profilseiten 16 und 17 über. Die Zusatz-Profilseiten 14 und 15 stehen senkrecht zu den Profilseiten 12 und 13 und demzufolge auch senkrecht zu den zugekehrten Außenseiten des Schaltschrank-Rahmengestelles bzw. den äußeren Profilseiten 16 und 17 des Rahmenschenkels 10.

Wie der Fig. 1 zu entnehmen ist, sind die Profilseiten 12 und 13 sowie die Zusatz-Profilseiten 16 und 17 mit Reihen von System-Befestigungsaufnahmen aus in einheitlichem Raster eingebrachten rechteckförmigen Durchbrüchen 18 und Befestigungsbohrungen 19 versehen.

Die Vorrichtung verwendet zum Bilden von Verbindungsmöglichkeiten in allen drei Richtungen als Befestigungsblöcke 20 ausgebildete Befestigungselemente, die als Spritzgußteile aus Metall oder Kunststoff kostengünstig herstellbar sind.

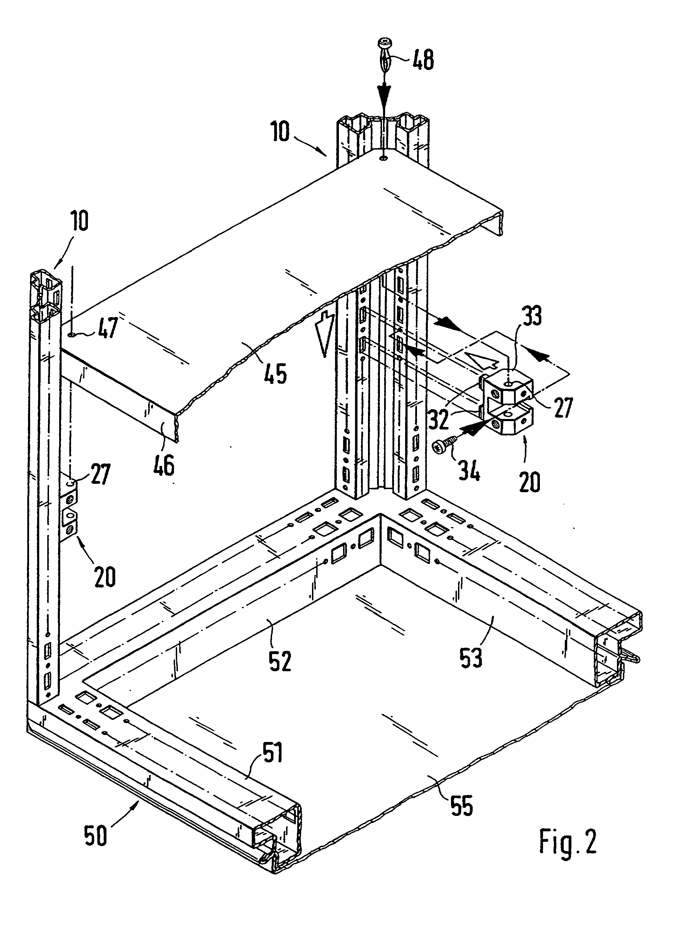

Diese massiv ausgebildeten Befestigungsblöcke 20 weisen zwei im rechten Winkel zueinander stehende Anlageflächen 21 und 22 auf, die an die Profilseiten 12 und 13 des Rahmenschenkels 10 anlegbar und mit diesem verbindbar sind. Die Anlageflächen 12 und 13 des Befestigungsblockes 20 gehen in senkrecht dazu stehende Befestigungsflächen 23 und 24 über, die nach dem Anbringen des Befestigungsblockes 20 am Rahmenschenkel 10 bündig mit dessen Zusatz-Profilseiten 14 und 15 bündig abschließen. In die Befestigungsflächen 23 und 24 sind schlitzförmige Aussparungen 25 und 26 eingebracht, die sich nicht bis zu den Anlageflächen 21 und 22 erstrecken. Dabei ist die Breite der Aussparung 25 an den Durchmesser des Schraubenkopfes der Schraube 34 angepaßt. Die Aussparung 26 in der Befestigungsfläche 24 ist zur Anlagefläche 22 hin offen, jedoch nur in einer Breite, die dem Durchmesser des Gewindeteils der Schraube 34 entspricht. Wie der Fig. 2 zu entnehmen ist, können an der Anlagefläche 21 Ansätze 32 angeformt sein, die in Durchbrüche 18 der Profilseite 12 des Rahmenschenkels 10 einführbar sind. Damit läßt sich der Befestigungsblock 20 im Raster der System-Befestigungsaufnahmen positionieren, bevor er am Rahmenschenkel 10 festgeschraubt wird. Die Ausnehmung 26 in der Befestigungsfläche 23 kann zur Anlagefläche 21 hin ebenfalls offen und entsprechend in der Breite reduziert sein, so daß der Befestigungsblock 20 wahlweise mit der Profilseite 12 oder 13 verschraubt werden kann, wobei eine Bohrung 19 der System-Befestigungsaufnahme belegt wird.

Die Stirnseiten 33 des Befestigungsblockes 20 bilden Verbindungsmöglichkeiten mit ihrer Bohrung 27 in der dritten Richtung.

Die Befestigungsflächen 23 und 24 tragen zwei Gewindeaufnahmen 28 und 29 bzw. 30 und 31, die in Längsrichtung des Rahmenschenkels 10 einen Abstand aufweisen, der dem Rastermaß der System-Befestigungsaufnahmen entspricht.

Die Anlageflächen 21 und 22 sowie die Befestigungsflächen 23 und 24 des Befestigungsblockes 20 gehen über parallel zueinander und zum Nutgrund der Schwalbenschwanznut verlaufende Übergangsabschnitte ineinander über. Der Befestigungsblock 20 kann sich am Nutgrund abstützen und steht nicht unnötig weit in dem Innenraum des Schaltschrank-Rahmengestelles am Rahmenschenkel 10 ab.

Wie Fig. 1 zeigt, kann ein Anbauelement, wie ein über ein Betätigungsglied 44 betätigbarer Schalter 40 an dem Befestigungsblock 20 festgeschraubt werden, wenn dieser einen Befestigungsflansch 42 mit zwei im Rastermaß beabstandete Langlöcher 42 für Befestigungsschrauben 43 aufweist. Die Befestigungsschrauben 43 werden in die Gewindeaufnahmen 30 und 31 der Befestigungsfläche 24 eingeschraubt. In derselben Weise kann der Schalter 40 auch an der Befestigungsfläche 23 des Befestigungsblockes 20 festgemacht werden.

In der Fig. 2 sind von einem Schaltschrank-Rahmengestell die beiden hinteren oder vorderen vertikalen Rahmenschenkel 10 sowie im Bodenrahmen 50 die horizontalen Rahmenschenkel 51, 52 und 53 gezeigt. Der Bodenrahmen 50 kann mittels Bodenblech 55 verschlossen sein. An den beiden vertikalen Rahmenschenkel 10 der Vorder- und der Rückseite werden in gleicher Höhenstellung (durch die System-Befestigungsaufnahmen vorgegeben) vier Befestigungsblöcke 20 angebracht, wie anhand der Fig. 1 beschrieben.

Auf die nach oben gekehrten Stirnseiten 33 der Befestigungsblöcke 20 wird eine mit abgekantetem Rand 46 versehene Ablageplatte 45 aufgelegt. Die Ablageplatte 45 trägt in den Eckbereichen auf die Bohrungen 27 der Befestigungsblöcke 20 ausgerichtete Befestigungsbohrungen 47, in die Befestigungselemente 48 einsteckbar sind. Dabei können diese Befestigungselemente 48 als Spreizelemente ausgebildet sein, die im Bereich der Aussparungen 25 und 26 des Befestigungsblockes 20 verrasten.

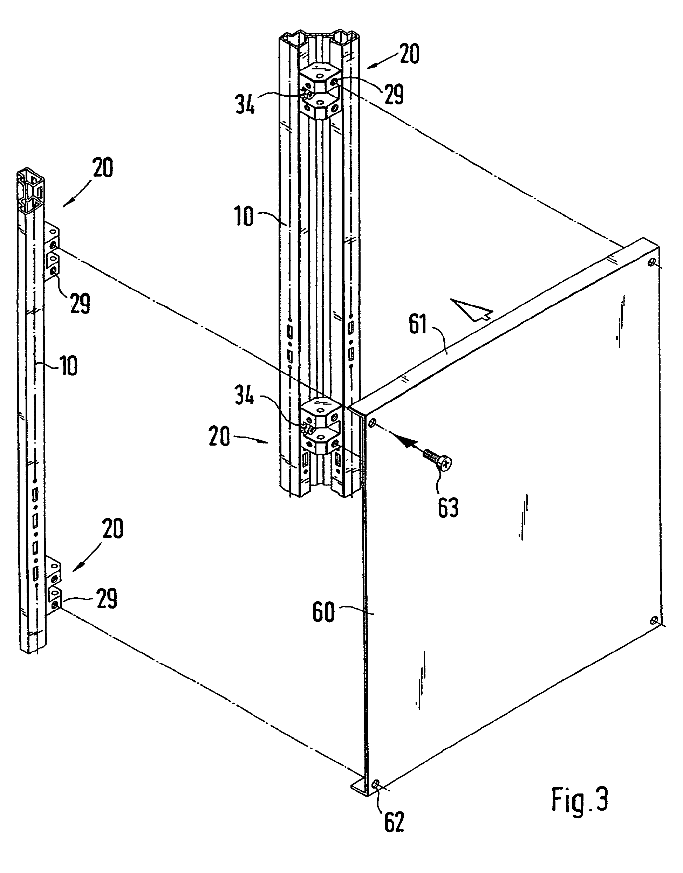

Wie Fig. 3 zeigt, kann in ähnlicher Weise eine vertikale Montageplatte 60 an zwei benachbarten vertikalen Rahmenschenkeln 10 eines Schaltschrank-Rahmengestelles befestigt werden. Dazu werden an jedem Rahmenschenkel 10 zwei Befestigungsblöcke 20 so positioniert und befestigt, daß der horizontale Rand 61 der Montageplatte 60 die obere Stirnfläche 33 der oberen Befestigungsblöcke 20 überdeckt und die untere Stirnfläche 33 der unteren Befestigungsblöcke 20 untergreift. Die Montageplatte 60 kann dann an die zugekehrten Befestigungsflächen der vier Befestigungsblöcke 20 angelegt und mit den Befestigungsschrauben 63 daran festgeschraubt werden. Die Montageplatte 60 ist mit auf die Gewindeaufnahmen 28, 29, 30 oder 31 ausgerichteten Befestigungsbohrungen 62 versehen.

Die Befestigungsblöcke 20 können anstelle der Aussparungen 25 und 26 auch im Durchmesser abgesetzte Bohrungen für die Schrauben 34 tragen, die von einer Befestigungsfläche ausgeht und zur parallel dazu verlaufenden Anlagefläche gerichtet sind.

## Patentansprüche

1. Vorrichtung zum Befestigen von Anbauelementen wie Montageschienen, Montageplatten (60), Ablageplatten (45) und dgl. an einem Rahmenschenkel (10) eines Schaltschrank-Rahmengestelles, bei der die Rahmenschenkel (10) symmetrisch zu ihrer Querschnittsdiagonale ausgebildet und mit dieser auf die Diagonale des Rahmengestelles ausgerichtet sind, bei der die Rahmenschenkel (10) auf der zum Rahmengestell-Innenraum gerichteten Innenseite eine Befestigungsaufnahme mit zwei senkrecht zueinander stehenden Profilseiten (12,13) aufweise, die parallel zu den zugekehrten Außenseiten des Schaltschrank-Rahmengestelles verlaufen, mit System-Befestigungsaufnahmen aus quadratischen oder rechteckförmigen Durchbrüchen (18) und Befestigungsbohrungen (19) versehen sind und in Zusatz-Profilseiten (14,15) mit gleichen Reihen von Befestigungsaufnahmen übergehen, die senkrecht zu den zugekehrten Außenseiten des Schaltschrank-Rahmengestelles stehen, und bei der mit den Rahmenschenkeln (10) Befestigungselemente verbindbar sind, die in drei jeweils im rechten Winkel zueinander stehenden Richtungen Befestigungsflächen (22,24,33) mit Befestigungsaufnahmen (27 bis 31) tragen, wobei die Befestigungselemente als Befestigungsblöcke (20) ausgebildet sind, die mit zwei im rechten Winkel zueinander stehenden Anlageflächen (21, 22) an die Profilseiten (12, 13) eines Rahmenschenkels (10) anlegbar und mit diesem verbindbar sind,
wobei die Anlageflächen (21, 22) der Befestigungsblöcke (20) in Befestigungsflächen (23, 24) übergehen, die bei am Rahmenschenkel (10) angebrachten Befestigungsblock (20) bündig mit den Zusatz-Profilseiten (14, 15) des Rahmenschenkels (10) abschließen, und
wobei die Befestigungsblöcke (20) in den senkrecht zur Längsrichtung des Rahmenschenkels (10) stehenden Stirnseiten (33) und den mit den Zusatz-Profilseiten (14, 15) bündigen Befestigungsflächen (23, 24) mit als Bohrungen (27) und/oder Gewindeaufnahmen (28, 29, 30, 31) ausgebildeten Befestigungsaufnahmen versehen sind.
**dadurch gekennzeichnet,**
**dass** eine der Anlageflächen (21) mit Ansätzen (32) versehen ist, die in Befestigungsaufnahmen (18) einer Profilseite (12) des Rahmenschenkels (10) einführbar sind und
**dass** die andere Anlagefläche (z.B. 22) mittels Schraube (34) an der anderen Profilseite (z.B. 13) festschraubbar ist.

2. Vorrichtung nach Anspruch 1,
**dadurch gekennzeichnet,**
**dass** die Schraube (34) in eine im Durchmesser abgesetzte Durchgangsbohrung einsetzbar ist, die von der der Anlagefläche (z.B. 22) gegenüberliegenden parallelen Befestigungsfläche (23) ausgeht.

3. Vorrichtung nach Anspruch 1 oder 2,
**dadurch gekennzeichnet,**
**dass** die Schraube (34) in schlitzförmige Aussparungen (25 und 26) der Befestigungsflächen (23, 24) und zumindest einer Anlagefläche (z.B. 22) einführbar ist, wobei im Bereich der Anlagefläche (z.B. 22) die Aussparung (26) Abstützstege für den Schraubenkopf bildet.

4. Vorrichtung nach Anspruch 3,
**dadurch gekennzeichnet,**
**dass** die Breite der Aussparung (25) in den Befestigungsflächen (23, 24) an den Durchmesser des Schraubenkopfes der Schraube (34) und die Breite der Aussparung (26) in der Anlagefläche (z.B. 22) an den Durchmesser des Gewindeteils der Schraube (34) angepasst sind.

5. Vorrichtung nach einem der Ansprüche 1 bis 4,
**dadurch gekennzeichnet,**
**dass** beide Anlageflächen (21, 22) mit einer Aussparung (26) für eine Schraube (34) versehen sind, die sich nur über einen Teil der Breite der Anlageflächen (21, 22) erstrecken und von den zugekehrten Befestigungsflächen (23, 24) ausgehen.

6. Vorrichtung nach einem der Ansprüche 1 bis 5,
**dadurch gekennzeichnet,**
**dass** die Anlageflächen (21, 22) und die Befestigungsflächen (23, 24) über parallel zueinander verlaufende Übergangsabschnitte ineinander übergehen.

7. Vorrichtung nach einem der Ansprüche 1 bis 6,
**dadurch gekennzeichnet,**
**dass** die Profilseiten (12, 13) des Rahmenschenkels (10) Teil einer schwalbenschwanzförmigen Befestigungsaufnahme sind und
**dass** die Übergangsabschnitte bei am Rahmenschenkel (10) befestigten Befestigungsblock (20) parallel zum Nutgrund verlaufen.

8. Vorrichtung nach einem der Ansprüche 1 bis 7,
**dadurch gekennzeichnet,**
**dass** die Befestigungsblöcke (20) als Spritzgußteil aus Metall oder Kunststoff hergestellt sind.

9. Vorrichtung nach einem der Ansprüche 1 bis 8,
**dadurch gekennzeichnet,**
**dass** die Befestigungsflächen (23, 24) der Befestigungsblöcke (20) mindestens zwei Bohrungen und/oder Gewindeaufnahmen (28, 29; 30, 31) aufweisen, die in Längsrichtung des Rahmenschenkels (10) einen Abstand aufweisen, der dem Rastermaß der System-Befestigungsaufnahme des Schaltschrank-Rahmengestelles entspricht.

## Claims

1. Apparatus for fastening add-on elements such as installation rails, installation panels (60), shelf panels (45) and the like to a frame limb (10) of a switchgear cabinet framework, in which the frame limbs (10) are formed symmetrically with respect to the diagonal of their cross section and, together with this, are aligned with the diagonal of the framework, in which the frame limbs (10) have, on the inner side which is directed toward the framework interior, a fastening mount with two profile sides (12, 13), which are situated perpendicular to one another and run parallel to the facing outer sides of the switchgear cabinet framework, are provided with system fastening mounts comprising square or rectangular apertures (18) and fastening holes (19) and merge with additional profile sides (14, 15) with identical rows of fastening mounts which are situated perpendicular to the facing outer sides of the switchgear cabinet framework, and in which fastening elements can be connected to the frame limbs (10) and support fastening faces (22, 24, 33) with fastening mounts (27 to 31) in three directions which are each at right angles to one another, with the fastening elements being in the form of fastening blocks (20) which can be attached to the profile sides (12, 13) of a frame limb (10) and connected to the said frame limb by way of two abutment faces (21, 22) which are situated at a right angle to one another,
with the abutment faces (21, 22) of the fastening blocks (20) merging with fastening faces (23, 24) which terminate flush with the additional profile sides (14, 15) of the frame limb (10) when the fastening block (20) is fitted to the frame limb (10), and
with the fastening blocks (20), in the end sides (33) which are situated perpendicular to the longitudinal direction of the frame limb (10) and the fastening faces (23, 24) which are flush with the additional profile sides (14, 15), being provided with fastening mounts which are in the form of holes (27) and/or threaded mounts (28, 29, 30, 31),
**characterized**
**in that** one of the abutment faces (21) is provided with projections (32) which can be inserted into fastening mounts (18) of a profile side (12) of the frame limb (10), and
**in that** the other abutment face (for example 22) can be firmly screwed to the other profile side (for example 13) by means of a screw (34).

2. Apparatus according to Claim 1,
**characterized**
**in that** the screw (34) can be inserted into a through-hole which has a stepped diameter and starts from the parallel fastening face (23) which is opposite the abutment face (for example 22).

3. Apparatus according to Claim 1 or 2,
**characterized**
**in that** the screw (34) can be inserted into slot-like cutouts (25 and 26) in the fastening faces (23, 24) and at least one abutment face (for example 22), with the cutout (26) forming support webs for the screw head in the region of the abutment face (for example 22).

4. Apparatus according to Claim 3,
**characterized**
**in that** the width of the cutout (25) in the fastening faces (23, 24) is matched to the diameter of the screw head of the screw (34) and the width of the cutout (26) in the abutment face (for example 22) is matched to the diameter of the threaded part of the screw (34).

5. Apparatus according to one of Claims 1 to 4,
**characterized**
**in that** the two abutment faces (21, 22) are provided with a cutout (26) for a screw (34), which cutouts extend only over part of the width of the abutment faces (21, 22) and start from the facing fastening faces (23, 24).

6. Apparatus according to one of Claims 1 to 5,
**characterized**
**in that** the abutment faces (21, 22) and the fastening faces (23, 24) merge with one another via transition sections which run parallel to one another.

7. Apparatus according to one of Claims 1 to 6,
**characterized**
**in that** the profile sides (12, 13) of the frame limb (10) are part of a dove-tail-like fastening mount, and
**in that** the transition sections run parallel to the groove base when the fastening block (20) is fastened to the frame limb (10).

8. Apparatus according to one of Claims 1 to 7,
**characterized**
**in that** the fastening blocks (20) are produced from metal or plastic as die-cast or injection-moulded parts.

9. Apparatus according to one of Claims 1 to 8,
**characterized**
**in that** the fastening faces (23, 24) of the fastening blocks (20) have at least two holes and/or threaded mounts (28, 29; 30, 31) which, in the longitudinal direction of the frame limb (10), are at a distance which corresponds to the grid dimensions of the system fastening mount of the switchgear cabinet framework.

## Revendications

1. Dispositif pour fixer des éléments de support tels que des rails de montage, des plaques de montage (60), des plaques de support (45) et similaires sur un montant (10) d'un châssis d'une armoire de distribution, dans lequel les montants (10) sont réalisés de manière symétrique par rapport à leur diagonale en section transversale et sont alignés suivant celle-ci avec la diagonale du châssis, les montants (10) présentant, du côté intérieur orienté vers la cavité intérieure du châssis, un logement de fixation ayant deux côtés profilés (12, 13) perpendiculaires l'un à l'autre, qui s'étendent parallèlement aux côtés extérieurs tournés vers eux du châssis d'armoire de distribution, qui sont pourvus de logements de fixation de système constitués d'orifices (18) carrés ou rectangulaires et d'alésages de fixation (19), et qui se prolongent par des côtés profilés supplémentaires (14, 15) ayant les mêmes rangées de logements de fixation, qui sont perpendiculaires aux côtés extérieurs tournés vers eux du châssis d'armoire de distribution, et des éléments de fixation pouvant être connectés aux montants (10) et portant des surfaces de fixation (22, 24, 33) avec des logements de fixation (27 à 31) dans trois directions respectivement perpendiculaires les unes aux autres, les éléments de fixation étant réalisés sous forme de blocs de fixation (20) qui peuvent être appliqués avec deux surfaces d'appui (21, 22) perpendiculaires l'une à l'autre contre les côtés profilés (12, 13) d'un montant (10) et être connectés à ceux-ci,
les surfaces d'appui (21, 22) des blocs de fixation (20) se prolongeant par des surfaces de fixation (23, 24), qui se terminent en affleurement avec les côtés profilés supplémentaires (14, 15) du montant (10) lorsque le bloc de fixation (20) est monté sur le montant (10), et
les blocs de fixation (20) étant pourvus, dans les côtés frontaux (33) perpendiculaires à la direction longitudinale du montant (10) et les surfaces de fixation (23, 24) en affleurement avec les côtés profilés supplémentaires (14, 15), de logements de fixation réalisés sous forme d'alésages (27) et/ou de logements filetés (28, 29, 30, 31),
**caractérisé en ce que**
l'une des surfaces d'appui (21) est pourvue de pièces (32) qui peuvent être introduites dans des logements de fixation (18) d'un côté profilé (12) du montant (10) et
**en ce que** l'autre surface d'appui (par exemple 22) peut être vissée fixement au moyen d'une vis (34) à l'autre côté profilé (par exemple 13).

2. Dispositif selon la revendication 1,
**caractérisé en ce que**
la vis (34) peut être insérée dans un alésage traversant de diamètre réduit qui part de la surface de fixation (23) parallèle et opposée à la surface d'appui (par exemple 22).

3. Dispositif selon la revendication 1 ou 2,
**caractérisé en ce que**
la vis (34) peut être insérée dans des évidements en forme de fente (25 et 26) des surfaces de fixation (23, 24) et d'au moins une surface d'appui (par exemple 22), l'évidement (26) formant dans la région de la surface d'appui (par exemple 22) des nervures de support pour la tête de vis.

4. Dispositif selon la revendication 3,
**caractérisé en ce que**
la largeur de l'évidement (25) dans les surfaces de fixation (23, 24) est adaptée au diamètre de la tête de vis de la vis (34) et la largeur de l'évidement (26) dans la surface d'appui (par exemple 22) est adaptée au diamètre de la partie filetée de la vis (34).

5. Dispositif selon l'une quelconque des revendications 1 à 4,
**caractérisé en ce que**
les deux surfaces d'appui (21, 22) sont pourvues d'un évidement (26) pour une vis (34), qui ne s'étend que sur une partie de la largeur des surfaces d'appui (21, 22) et qui part des surfaces de fixation tournées vers lui (23, 24).

6. Dispositif selon l'une quelconque des revendications 1 à 5,
**caractérisé en ce que**
les deux surfaces d'appui (21, 22) et les surfaces de fixation (23, 24) se prolongent les unes dans les autres par le biais de portions de transition s'étendant parallèlement les unes aux autres.

7. Dispositif selon l'une quelconque des revendications 1 à 6,
**caractérisé en ce que**
les côtés profilés (12, 13) du montant (10) font partie d'un logement de fixation en forme de queue d'aronde et **en ce que** les portions de transition s'étendent parallèlement au fond de rainure lorsque le bloc de fixation (20) est fixé sur le montant (10).

8. Dispositif selon l'une quelconque des revendications 1 à 7,
**caractérisé en ce que**
les blocs de fixation (20) sont fabriqués sous forme de pièce moulée par injection de métal ou de plastique.

9. Dispositif selon l'une quelconque des revendications 1 à 8,
**caractérisé en ce que**
les surfaces de fixation (23, 24) des blocs de fixation (20) présentent au moins deux alésages et/ou logements filetés (28, 29 ; 30, 31) qui présentent, dans la direction longitudinale du montant (10), un espacement qui correspond à la matrice du logement de fixation du système du châssis d'armoire de distribution.
